# EUROPÄISCHE PATENTSCHRIFT

(11) **EP 1 447 603 B1**
(45) Veröffentlichungstag und Bekanntmachung des Hinweises auf die Patenterteilung: **17.09.2008**
(21) Anmeldenummer: 04003056.1
(22) Anmeldetag: 11.02.2004
(51) Int. Cl.: F16K 31/165, F16K 1/22, F02D 9/10

(54) **Drosselklappe und Verfahren zu deren Herstellung**
Throttle butterfly valve and method of producing
Soupape à papillon et procédé pour la produire

(30) Priorität: 12.02.2003 DE 10305673
(43) Veröffentlichungstag der Anmeldung: 18.08.2004
(73) Patentinhaber: Mann + Hummel GmbH, 71638 Ludwigsburg (DE)
(72) Erfinder: Mangold, Christof, 70825 Korntal-Münchingen (DE); Bühl, Heinz, 74235 Erlenbach (DE); Djikam Tchalé, Sylvain Michel, 76137 Karlsruhe (DE); Gessner, Klaus, 75417 Mühlacker (DE); Traichel, Dirk, 74321 Bietigheim-Bissingen (DE); Wagner, Werner, 71691 Freiberg (DE); Klotz, Arthur, 71686 Remseck (DE); Steiner, Günther, 71549 Auenwald (DE); Bartel, Walther, 70188 Stuttgart (DE); Zirnig, Günther, 71679 Asperg (DE)
(74) Vertreter: Riedel, Peter

(56) Entgegenhaltungen:
- EP-A- 0 482 272
- DE-A- 10 105 526
- DE-T2- 69 707 652
- FR-A- 2 687 601
- US-B1- 6 451 238

## Beschreibung

Die Erfindung betrifft ein Verschlusselement für einen gasführenden Kanal der im Oberbegriff des Anspruchs 1 angegebenen Gattung sowie ein Verfahren zur Herstellung eines Verschlusselementes gemäß dem Oberbegriff des Anspruchs 8.

Die EP 0 482 272 A1 offenbart ein Steuerventil, das ein Ventilgehäuse mit einem Durchgangskanal und einen um eine Achse in dem Kanal drehbar angeordneten Ventilkörper aufweist. Das Ventilgehäuse und der Ventilkörper bilden eine Baueinheit, wobei der Ventilkörper und dessen Achse aus Kunststoff bestehen. In einem Werkzeug wird zunächst in einem ersten Spritzvorgang das Ventilgehäuse erzeugt und danach in einem zweiten Spritzvorgang der Ventilkörper und die Achse dadurch erzeugt, dass Kunststoff in einen zwischen dem Ventilgehäuse und der Werkzeugform gebildeten Hohlraum eingespritzt wird.

In der FR 2 687 601 A1 ist ein Verfahren zur Herstellung eines Steuerventils beschrieben, wobei das Steuerventil ein Ventilgehäuse und eine Drosselklappe umfasst. In eine Werkzeugform wird zunächst eine aus Metall bestehende Achse eingelegt und dann die Form geschlossen. In einem ersten Spritzvorgang wird der in der Form gebildete Hohlraum mit Kunststoff gefüllt und auf diese Weise das Ventilgehäuse erzeugt. Danach werden Schieber im Werkzeug zurückgezogen, wodurch ein weiterer Hohlraum freigegeben wird, in dem durch einen zweiten Spritzvorgang die Drosselklappe erzeugt wird.

Aus der DE 44 13 765 C2 ist es bekannt, daß am Ansaugstutzen eines Luftfilters ein Verschlusselement in Form einer Drosselklappe angeordnet ist. Das Verschlusselement ist in das Filtergehäuse integriert, so daß eine spätere Anpassung nicht möglich ist.

Aus der DE 697 07 652 T2 ist ein Verschlusselement für einen gasführenden Kanal, insbesondere zur Versorgung eines Verbrennungsmotors mit Verbrennungsluft bekannt. Das Verschlusselement umfaßt eine Drosselklappe, die in einem Kanalabschnitt drehbar gelagert ist und die von einer Unterdruckdose betätigt wird. Der Kanalabschnitt ist in der Ebene der Klappenwelle geteilt und mit entsprechenden Lagern versehen. Diese separaten Kanalabschnitte mit Lagern sind notwendig, um die Gesamtanordnung montierbar zu gestalten, was bezüglich Herstellung und Montage mit entsprechenden Kosten verbunden ist.

Die DE 100 42 923 A1 beschreibt ein Verschlusselement, bei dem eine Drosselklappe in einem Kanalabschnitt drehbar gelagert ist. Die Drosselklappe ist von einer Unterdruckdose betätigt. Die Bewegung der Unterdruckdose wird dabei über eine Hebelanordnung auf die Drosselklappe übertragen. Die Lagerungsanordnung für die Drosselklappe ist äußerst aufwendig und es sind eine Vielzahl von Einzelteilen herzustellen und zu montieren, um eine funktionsfähige Ausführung eines Verschlusselementes zu erhalten.

Der Erfindung liegt die Aufgabe zugrunde, ein Verschlusselement für einen gasführenden Kanal und ein Herstellungsverfahren zu schaffen, bei dem der Montageaufwand erheblich reduziert ist.

Diese Aufgabe wird durch ein Verschlusselement mit den Merkmalen des Anspruchs 1 und durch ein Verfahren zur Herstellung des Verschlusselementes mit den Merkmalen des Anspruchs 6 gelöst.

Die Drosselwelle bzw. Klappenachse steht zumindest auf einer Seite aus dem Kanalabschnitt hervor, wobei an dem hervorstehenden Abschnitt ein Hebel angeordnet ist. Dieser Hebel ist einstückig mit der Drosselwelle ausgeführt.

Dadurch, daß die Drosselklappe mit ihrer zugehörigen Welle bzw. Achse unmittelbar in den Kanalabschnitt eingespritzt wird, entfällt eine nachträgliche Montage der Drosselklappe. Es ist zweckmäßig, daß im Kanalabschnitt Öffnungen zur Aufnahme der Welle bzw. Achse vorgesehen sind. Für bestimmte Ausführungen ist es vorteilhaft, in den Öffnungen auch Gleitlager, d. h. Lagerbuchsen vorzusehen. Derartige Gleitlager haben den Vorteil, daß durch die Wahl des Werkstoffs die Reibung im Lagerbereich deutlich reduziert wird. Auch der Verschleiß der Lager wird gegenüber Materialpaarungen, bei denen glasfaserverstärkte Kunststoffe aufeinander gleiten, auf ein Minimum reduziert. Ein weiterer Vorteil der eingesetzten Lager bzw. Lagerbuchsen besteht darin, daß eine bessere Abdichtung gegeben ist, wodurch das Eindringen von Schmutzpartikeln oder Undichtigkeiten des Kanalabschnitts vermieden werden.

Zweckmäßig umfaßt das Verschlusselement ein Schaltmittel. Das Schaltmittel dient zur Betätigung der Drosselklappe. Das Schaltmittel ist vorteilhaft an dem Kanalabschnitt gehalten. Das Verschlusselement bildet mit dem Schaltmittel eine Einheit und kann mit diesem zusammen beispielsweise an einem Luftfilter montiert werden. Zweckmäßig schaltet das Schaltmittel die Drosselklappe zwischen einer geöffneten Stellung, in der die Drosselklappe parallel zur Kanallängsrichtung angeordnet ist und einer geschlossenen Stellung, in der die Drosselklappe den Kanalabschnitt weitgehend verschließt. Es kann jedoch auch zweckmäßig sein, daß das Schaltmittel die Stellung der Drosselklappe stufenlos schaltet. Insbesondere ist das Schaltmittel eine Unterdruckdose. Beim Einsatz des Verschlusselementes an einem Luftfilter kann die Drosselklappe so in Abhängigkeit des Drucks im Luftfilter geschaltet werden.

Um eine einfache Integration in einen gasführenden Kanal zu ermöglichen, ist vorgesehen, daß das Verschlusselement ein Schnappelement zur Anbindung an benachbarte Bauteile aufweist. Das Schnappelement ist insbesondere an den Stirnseiten des Kanalabschnitts ausgebildet und kann beispielsweise als umlaufende Nut oder als umlaufender Rand gestaltet sein, der mit einem entsprechenden Rand bzw. einer entsprechenden Nut an einem benachbarten Bauteil zusammenwirkt.

Bezüglich der Verfahrensschritte zur Herstellung des Verschlusselementes ist vorgesehen, den Kanalabschnitt in einer ersten Spritzform zu erzeugen und in einer zweiten Form dann die Drosselklappe mit der Welle einzuspritzen. Bei dieser Durchführung des Verfahrens in unterschiedlichen Spritzformen können diese im selben Werkzeug befindlich sein, es besteht jedoch auch die Möglichkeit die Spritzform in verschiedenen Werkzeugen auszubilden.

Ausführungsbeispiele der Erfindung sind im folgenden anhand der Zeichnung näher erläutert. In der Zeichnung zeigt:
- Fig. 1: ein Verschlußelement in perspektivischer Darstellung,
- Fig. 2: einen Schnitt entlang der Achse eines als Drosselklappe ausgebildeten Verschlußelementes in der Spritzform,
- Fig. 3: eine perspektivische Darstellung des Kanalabschnitts mit angeformtem Gehäuseteil zur Aufnahme von Antriebsmitteln und einem Befestigungsabschnitt,
- Fig. 4: eine Darstellung der Klappe und des Kurbeltriebs (ohne Kanalabschnitt),
- Fig. 5: eine perspektivische Darstellung des Verschlußelementes mit Merkmalen der Fig. 3 und 4 in Ansicht auf den Kurbeltrieb an der Drosselklappenachse.

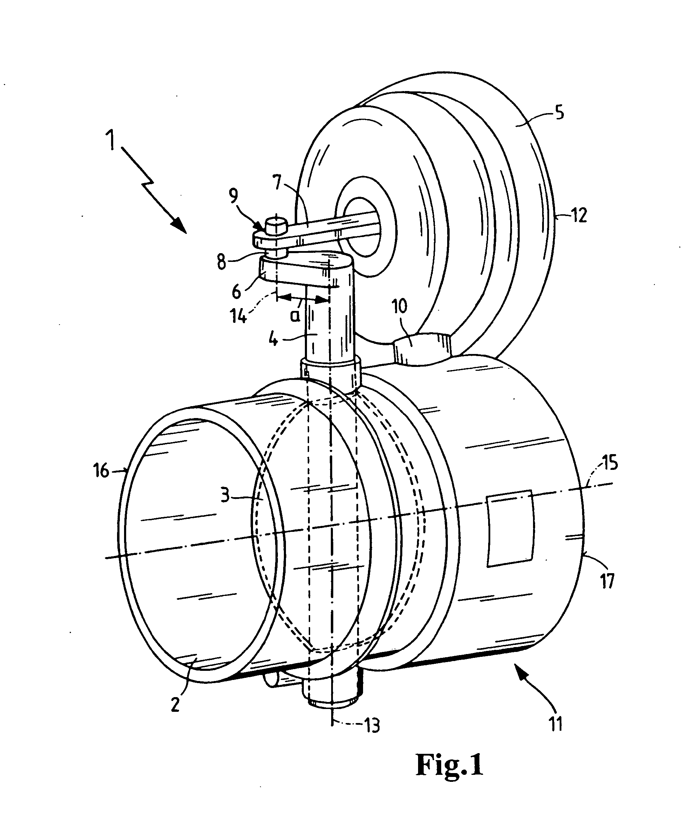

Das in der Fig. 1 dargestellte Verschlußelement 1 umfaßt einen Kanalabschnitt 2, in dem eine Drosselklappe 3 mit einer Drosselwelle 4 schwenkbar gelagert ist. Der Kanalabschnitt 2 besitzt einen kreisförmigen Querschnitt. Es können jedoch auch andere Querschnittsformen, wie beispielsweise ein rechteckiger Querschnitt mit einer rechteckigen, beispielsweise einseitig gelagerten Drosselklappe, vorteilhaft sein. Die Drosselklappe 3 bildet mit der Drosselwelle 4 und dem Kanalabschnitt 2 eine gemeinsame, gegenüber anderen Anlagenteilen separate Baueinheit 11. Zur Betätigung der Drosselklappe 3 ist eine Unterdruckdose 5 vorgesehen. Es können jedoch auch andere Schaltmittel zweckmäßig sein. Die Unterdruckdose 5 ist über eine Halterung 10 am Kanalabschnitt 2 gehalten.

Zur Betätigung der Drosselklappe 3 besitzt die Unterdruckdose 5 einen Arm 7, der entsprechend dem auf der Anschlußseite 12 an der Unterdruckdose 5 anliegenden Unterdruck ausgelenkt ist. Der Arm 7 besitzt eine Öffnung 9, durch die ein Bolzen 8 ragt. Der Bolzen 8 ist an einem drehfest auf der Drosselwelle 4 angeordneten Hebel 6 angeordnet. Die Längsachse 13 der Drosselwelle 4 besitzt zur Längsachse 14 des Bolzens 8 einen Abstand a. Eine annähernd lineare Bewegung des Arms 7 wird so in eine Drehbewegung der Drosselwelle 4 um die Längsachse 13 umgewandelt. Hierdurch wird die Drosselklappe 3 geöffnet bzw. geschlossen. In geöffneter Stellung ist die Drosselklappe 3 etwa in Richtung der Längsmittelachse 15 des Kanalabschnitts 2 angeordnet. In geschlossener Stellung verschließt die Drosselklappe 3 den Kanalabschnitt 2 weitgehend. Die Drosselklappe 3 kann zwischen der geöffneten und der geschlossenen Stellung geschaltet sein, es kann jedoch auch zweckmäßig sein, daß die Drosselklappe 3 stufenlos geschaltet ist.

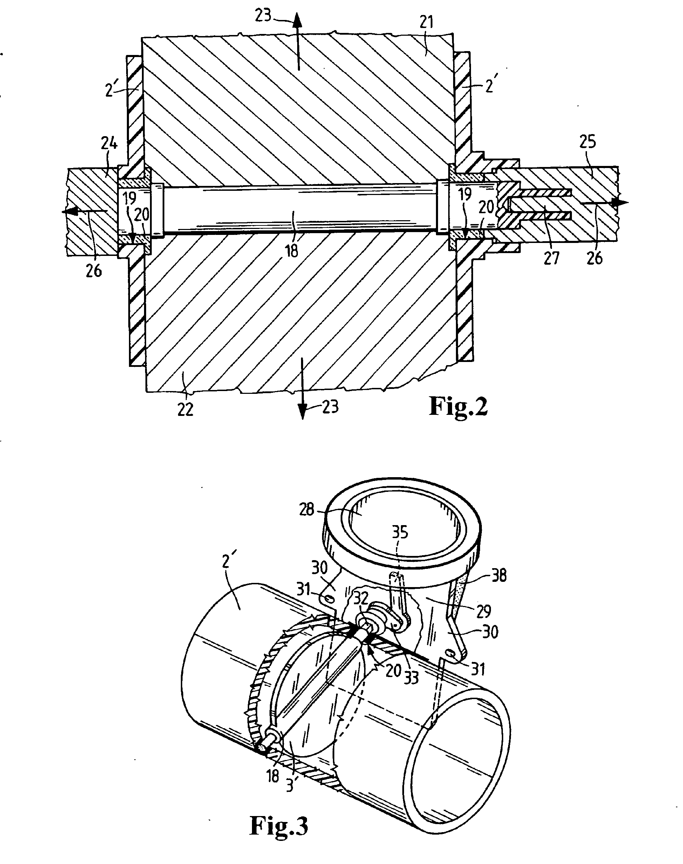

Die Fig. 2 zeigt einen Schnitt entlang der Achse 18 eines als Drosselklappe ausgebildeten Verschlusselementes in dem Spritzwerkzeug. Nach dem Erzeugen des Kanalabschnitts 2' sind in Öffnungen 19 Gleitlager 20 eingesetzt, die aus einem Werkstoff bestehen, der in Bezug auf den einzuspritzenden Kunststoff für die Klappenachse 18 temperaturbeständig ist. Alternativ dazu ist es auch möglich, die Gleitlager vor dem Spritzen des Kanalabschnitts im Werkzeug zu positionieren. Als Material für die Drosselklappe und Klappenachse 18 kommt beispielsweise PBT ggf. mit einem Glasfaseranteil in Betracht. Es sind innerhalb des Kanalabschnitts 2' zwei Schieber 21 und 22 vorgesehen, deren Entformungsrichtung quer zur Klappenachse mit Pfeilen 23 angegeben ist. Außerhalb des Kanalabschnitts 2' befinden sich zwei Schieber 24 und 25, die in Richtung der Pfeile 26 entformbar sind.

Die Schieber 21, 22, 24 und 25 begrenzen einen Hohlraum, der die Form der Klappenachse 18 definiert, und senkrecht zur Zeichnungsebene ist zwischen den Schiebern 21, 22 ein Hohlraum gebildet, in dem die Drosselklappe geformt wird. Am Schieber 25 ist ein zentrisch zur Klappenachse 18 verlaufender Dorn 27 vorgesehen, der eine Öffnung am Ende der Achse bildet, in welcher eine Befestigungsschraube aufgenommen werden kann. Bei besonderen Anforderungen an die Biegesteifigkeit der Klappenachse 18 kann auch ein Stahlstift vorgesehen sein, der vor dem Spritzen der Achse und des Klappenkörpers in das Werkzeug eingelegt und darin gut positioniert gehalten wird. Da der Stahlstift vom Kunststoffmaterial überzogen wird, ist dieser später nicht sichtbar.

Die Fig. 3 zeigt eine perspektivische Ansicht des Kanalabschnitts 2' mit einem an diesem angeformten Gehäuseteil 28, das zur Aufnahme von Antriebsmitteln für die im Kanalabschnitt 2' befindliche Drosselklappe 3' dient. Das Gehäuseteil 28 wird von einer Platte 29 getragen, die einstückig mit dem Kanalabschnitt 2' gespritzt ist und somit aus dem gleichen Kunststoffmaterial besteht, wie der Kanalabschnitt 2' selbst sowie das Gehäuseteil 28. Am oberen Ende der Platte 29 befindet sich ein Befestigungsabschnitt 30 mit Öffnungen 31 zur Aufnahme von Befestigungsmitteln.

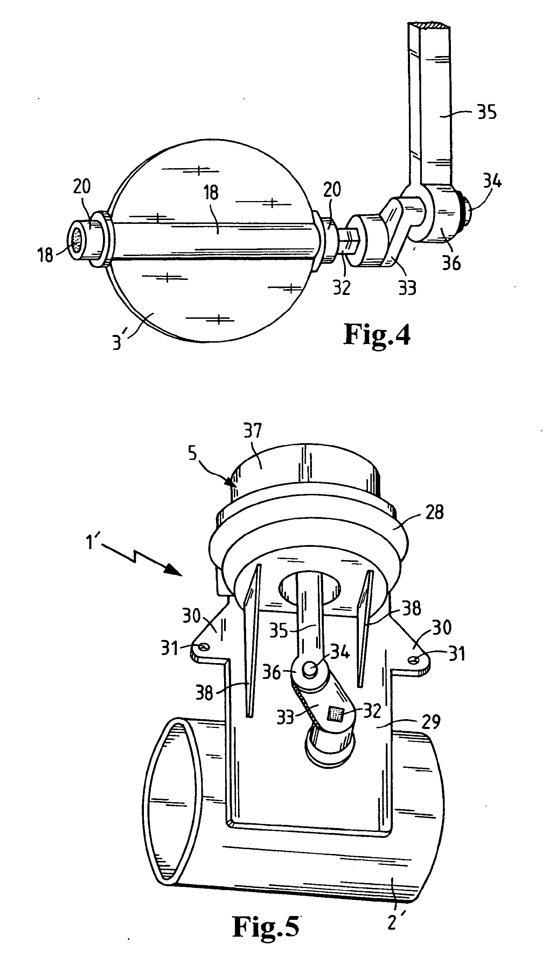

In der Fig. 4 ist ohne den Kanalabschnitt die Drosselklappe 3' mit einem Kurbeltrieb dargestellt. Auf den Enden der Klappenachse 18 befinden sich die Gleitlager 20, wobei auf der rechten Seite in Fig. 4 die Klappenachse 14 aus dem Gleitlager 20 herausragt und dieser überstehende Abschnitt als Vierkantzapfen 32 ausgebildet ist. Auf den Vierkantzapfen 32 wird ein mit einer entsprechenden Öffnung versehener Hebel 33 gesteckt, an dessen anderem Ende eines Hebelarms ein Zapfen 34 ausgebildet ist, der in einem Lagerauge 36 einer Betätigungsstange 35 gelagert ist.

Die Fig. 5 zeigt eine perspektivische Darstellung des Verschlußelementes 1' in der Ansicht auf den Kurbeltrieb an der Drosselklappenachse. Es ist daraus ersichtlich, daß die Platte 29 über einen erheblichen Abschnitt der Länge des Kanalabschnitts 2' an diesem angeformt ist und die Unterseite des Gehäuseteils 28 mittels Stützstreben 38 in Form dreieckiger Wandteile an der Platte 29 abgestützt ist. Damit ergibt sich eine stabile und formsteife Einheit eines Verschlußelementes 1' mit einem Antrieb.

Der Antrieb ist im Ausführungsbeispiel der Fig. 5 eine Unterdruckdose 5 mit üblichem Aufbau, d. h. zwischen dem Gehäuseteil 28 und einem aufgesetzten Deckel 37 ist der Rand einer federbelasteten Gummimembran eingespannt. Bei Beaufschlagung der Arbeitskammer mit Unterdruck wird die Membran und mit dieser auch die Betätigungsstange 35 gegen die Kraft einer Rückstellfeder bewegt und damit die Drosselklappe 3 bzw. 3' gemäß Fig. 1, 3 und 4 betätigt.

Sofern erforderlich, kann zur Unterstützung der Rückstellkraft eine weitere Feder vorgesehen sein, beispielsweise eine Drehfeder, die an der Klappenachse angreift. Außerdem kann je nach Anforderungen oder Einsatzbedingungen eine Dichtung zwischen Klappenachse und Kanalabschnitt vorgesehen sein. Wie weiter aus Fig. 5 ersichtlich ist, ragt durch eine Öffnung an der Unterseite des Gehäuseteils 28 die Betätigungsstange 35, in deren Lagerauge 36 der Zapfen 34 aufgenommen ist. Der Hebel 33 ist auf den Vierkantzapfen 32 gesteckt. Am oberen Ende der Platte 29 ist der Befestigungsabschnitt 30 mit den Öffnungen 31 ausgebildet.

Das Verschlußelement 1 kann zweckmäßig zur Integration in einer Ansaugleitung bzw. am Gehäuse eines Luftfilters eingesetzt werden. Insbesondere bei einem Luftfilter mit zwei Ansaugstellen kann das Verschlußelement 1 als Schutz gegen Wasser eingesetzt sein. Dabei wird bei Trockenheit eine Ansaugstelle, die einer optimalen Luftführung entspricht, durch ein Verschlußelement geöffnet, also die Drosselklappe 3 in Richtung der Längsmittelachse 15 gestellt, wie dies aus Fig. 1 ersichtlich ist. Bei Nässe kann eine zweite Ansaugstelle geöffnet werden, während die erste Ansaugstelle geschlossen wird. Dadurch, daß bei geschlossener Drosselklappe 3 nur noch ein sehr geringer Luftstrom durch den Kanalabschnitt 2 strömt, kann sich Feuchtigkeit in einem dem Verschlußelement vorgeschalteten Bauteil niederschlagen und dort abgeführt werden. Es kann auch vorteilhaft sein, das Verschlußelement 1 in einem gasführenden Kanal eines geschalteten akustischen Bauteils oder einem anderen System, insbesondere im Ansaugbereich von Brennkraftmaschinen einzusetzen. Es können auch weitere Einsatzzwecke vorteilhaft sein.

## Patentansprüche

1. Verschlusselement für einen gasführenden Kanal, wobei das Verschlusselement (1, 1') einen Kanalabschnitt (2, 2') umfasst, in dem eine Drosselklappe (3, 3') mittels einer Drosselwelle (4) bzw. einer Klappenachse (18) schwenkbar gelagert ist und der Kanalabschnitt (2, 2') mit der Drosselklappe (3, 3') eine gemeinsame, gegenüber den übrigen Anlageteilen separate Baueinheit (11) bildet, wobei die Drosselklappe (3 bzw. 3'), Drosselwelle (4) bzw. Klappenachse (18) und der Kanalabschnitt (2 bzw. 2') aus Kunststoff bestehen und die Drosselklappe (3, 3') mit der Drosselwelle (4) bzw. Klappenachse (18) in den Kanalabschnitt (2 bzw. 2') gespritzt sind, **dadurch gekennzeichnet, dass** die Drosselwelle (4) bzw. die Klappenachse (18) zumindest einen aus dem Kanalabschnitt (2, 2') hervorstehenden Abschnitt aufweist, an dem ein Hebel (6, 33) angeordnet ist und wobei der Hebel (6) einstückig mit der Drosselwelle (4) ausgeführt ist, und dass das Verschlusselement (1, 1') ein Schaltmittel bzw. einen Antrieb umfasst, welches bzw. welcher an dem Kanalabschnitt (2, 2') gehalten ist und die Drosselklappe (3, 3') zwischen einer geöffneten und einer geschlossenen Stellung schaltet, wobei das Schaltmittel bzw. der Antrieb eine Unterdruckdose (5) ist und die Unterdruckdose (5) einen Arm (7) mit einer Öffnung (9) besitzt, durch die ein am Hebel (6) angeordneter Bolzen (8) ragt.

2. Verschlusselement nach Anspruch 1, **dadurch gekennzeichnet, dass** die Drosselklappe (3 bzw. 3'), Drosselwelle (4) bzw. Klappenachse (18) und der Kanalabschnitt (2 bzw. 2') in einem gemeinsamen Werkzeug gespritzt sind.

3. Verschlusselement nach Anspruch 1 oder 2,
**dadurch gekennzeichnet, dass** in dem Kanalabschnitt (2, 2') Öffnungen (19) zur Aufnahme der Drosselwelle (4) bzw. der Klappenachse (18) vorgesehen sind.

4. Verschlusselement nach Anspruch 3,
**dadurch gekennzeichnet, dass** in den Öffnungen (19) des Kanalabschnitts (2') Gleitlager (20) angeordnet sind, in denen die Klappenachse (18) gelagert ist.

5. Verschlusselement nach einem der Ansprüche 1 bis 3,
**dadurch gekennzeichnet, dass** das Verschlusselement (1) ein Schnappelement zur Anbindung an benachbarte Bauteile aufweist.

6. Verfahren zur Herstellung eines Verschlusselementes (1, 1') für einen gasführenden Kanal, wobei das Verschlusselement (1, 1') einen Kanalabschnitt (2, 2') und eine darin mittels einer Drosselwelle (4) bzw. einer Klappenachse (18) schwenkbar gelagerte Drosselklappe (3, 3') umfasst, wobei in einem Werkzeug zunächst der Kanalabschnitt (2, 2') durch Spritzgießen erzeugt wird und durch entsprechende Schieber (21, 22, 24, 25) ein Hohlraum für die Drosselklappe (3, 3') sowie die Drosselwelle (4) bzw. die Klappenachse (18) verbleibt und Öffnungen zu deren schwenkbarer Aufnahme in dem Kanalabschnitt (2, 2') gebildet werden, anschließend im Werkzeug in einem zweiten Spritzvorgang die Drosselklappe (3, 3') und die Drosselwelle (4) bzw. Klappenachse (18) durch Einspritzen eines Kunststoffs in den genannten Hohlraum erzeugt werden und danach die Schieber (21, 22, 24, 25) in ihrer jeweiligen Entformungsrichtung bewegt werden und damit das Verschlusselement (1, 1') entformt wird,
**dadurch gekennzeichnet, dass** nach dem Spritzgießen des Kanalabschnitts (2, 2') dieser aus der Spritzform des Werkzeugs entfernt und in eine andere Form eingelegt wird und in dieser dann der zweite Spritzvorgang zur Herstellung der Drosselklappe (3, 3') und Drosselwelle (4) bzw. Klappenachse (18) erfolgt.

7. Verfahren nach Anspruch 6,
**dadurch gekennzeichnet, dass** nach dem Spritzgießen des Kanalabschnitts (2') Gleitlager (20) in Öffnungen (19) des Kanalabschnitts (2, 2') eingelegt werden.

8. Verfahren nach Anspruch 7,
**dadurch gekennzeichnet, dass** vor dem Spritzgießen des Kanalabschnitts (2') Gleitlager (20) in das Werkzeug eingelegt werden.

## Claims

1. A closure element for a gas supply channel, said closure element (1, 1') comprising a channel section (2, 2') in which a butterfly throttle valve (3, 3') is mounted such that it is able to pivot by means of a throttle shaft (4) or a flap shaft (18), and the channel section (2, 2') and butterfly throttle valve (3, 3') together form a common module (11) separate from the other parts of the arrangement, the butterfly throttle valve (3/3'), the throttle shaft (4) or flap shaft (18) and the channel section (2/2') being made of plastic and the butterfly throttle valve (3, 3') and the throttle shaft (4) or flap shaft (18) being injection moulded into the channel section (2/2'),
**characterised in that**
the throttle shaft (4) or flap shaft (18) has at least one section which projects out of the channel section (2, 2') on which is positioned a lever (6, 33), the lever (6) being designed in one piece with the throttle shaft (4), and the closure element (1, 1') comprises a switching means or a drive which is attached to the channel section (2, 2') and switches the butterfly throttle valve (3, 3') between an open and a closed position, the switching means or drive being a dashpot (5) and the dashpot (5) having an arm (7) with an opening (9) through which extends a bolt (8) positioned on the lever (6).

2. A closure element in accordance with claim 1,
**characterised in that**
the throttle butterfly valve (3/3'), the throttle shaft (4) or flap shaft (18) and the channel section (2/2') are injected in a common tool.

3. A closure element in accordance with claim 1 or 2,
**characterised in that**
provided in the channel section (2, 2') are openings (19) for receiving the throttle shaft (4) or flap shaft (18).

4. A closure element in accordance with claim 3,
**characterised in that**
positioned in the openings (19) in the channel section (2') are sliding bearings (20) in which the flap shaft (18) is mounted.

5. A closure element in accordance with one of claims 1 to 3,
**characterised in that**
the closure element (1) has a snap-on element for attaching it to adjacent components.

6. A process for manufacturing a closure element (1, 1') for a gas supply channel, said closure element (1, 1') comprising a channel section (2, 2') in which a butterfly throttle valve (3, 3') is mounted such that it is able to pivot by means of a throttle shaft (4) or a flap shaft (18), first the channel section (2, 2') being produced in a tool by means of injection moulding first with a void for the butterfly throttle valve (3, 3') and the throttle shaft (4) or flap shaft (18) being left by corresponding sliders (21, 22, 24, 25), and openings being formed such that they can be received in the channel section (2, 2') such that they are able to pivot, then in a second injection moulding process in the tool the butterfly throttle valve (3, 3') and the throttle shaft (4) or flap shaft (18) being produced by injecting a plastic into the aforementioned void and the sliders (21, 22, 24, 25) being moved in their respective directions of removal from the mould, thereby removing the closure element (1, 1') from its mould,
**characterised in that**
after the injection moulding of the channel section (2, 2') the latter is removed from the injection mould of the tool and inserted into another mould in which the second injection process for manufacturing the throttle butterfly valve (3, 3') and the throttle shaft (4) or flap shaft (18) then takes place.

7. A process in accordance with claim 6,
**characterised in that**
after the injection moulding of the channel section (2'), sliding bearings (20) are inserted into openings (19) in the channel section (2, 2').

8. A process in accordance with claim 7,
**characterised in that**
before the injection moulding of the channel section (2'), sliding bearings (20) are inserted into the tool.

## Revendications

1. Élément de fermeture pour un canal de conduite de gaz, dans lequel l'élément de fermeture (1, 1') comprend une section de canal (2, 2'), dans laquelle un papillon (3, 3') est logé de manière pivotante au moyen d'un arbre de papillon (4) et/ou d'un axe de clapet (18) et la section de canal (2, 2') forme avec le papillon (3, 3') une unité de construction (11) commune, séparée par rapport aux autres éléments de l'installation, dans lequel le papillon (3 et/ou 3'), l'arbre de papillon (4) et/ou l'axe de clapet (18) et la section de canal (2 et/ou 2') sont en matière plastique et le papillon (3, 3') avec l'arbre de papillon (4) et/ou l'axe de clapet (18) sont moulés par injection dans la section de canal (2 et/ou 2'), **caractérisé en ce que** l'arbre de papillon (4) et/ou l'axe de clapet (18) présente au moins une section en saillie de la section de canal (2, 2'), au niveau de laquelle est agencé un levier (6, 33) et dans lequel le levier (6) est réalisé d'un seul tenant avec l'arbre de papillon (4) et **en ce que** l'élément de fermeture (1, 1') comprend un moyen de commutation et/ou un entraînement, qui est maintenu au niveau de la section de canal (2, 2') et le papillon (3, 3') commute entre une position ouverte et une position fermée, dans lequel le moyen de commutation et/ou l'entraînement est une boîte à dépression (5) et la boîte à dépression (5) comporte un bras (7) avec une ouverture (9), par laquelle dépasse un boulon (8) agencé au niveau du levier (6).

2. Élément de fermeture selon la revendication 1, **caractérisé en ce que** le papillon (3 et/ou 3'), l'arbre de papillon (4) et/ou l'axe de clapet (18) et la section de canal (2 et/ou 2') sont moulés par injection dans un outil commun.

3. Élément de fermeture selon la revendication 1 ou 2, **caractérisé en ce que** des ouvertures (19) sont prévues dans la section de canal (2, 2') pour le logement de l'arbre de papillon (4) et/ou de l'axe de clapet (18).

4. Élément de fermeture selon la revendication 3, **caractérisé en ce que** des paliers (20), dans lesquels est logé l'axe de clapet (18), sont agencés dans les ouvertures (19) de la section de canal (2').

5. Élément de fermeture selon l'une quelconque des revendications 1 à 3, **caractérisé en ce que** l'élément de fermeture (1) présente un élément d'encliquetage destiné à relier des composants voisins.

6. Procédé de fabrication d'un élément de fermeture (1, 1') pour un canal de conduite de gaz, dans lequel l'élément de fermeture (1, 1') comprend une section de canal (2, 2') et un papillon (3, 3') logé de manière pivotante à l'intérieur au moyen d'un arbre de papillon (4) et/ou d'un axe de clapet (18), dans lequel la section de canal (2, 2') est d'abord fabriquée dans un outil par moulage par injection et il reste une cavité pour le papillon (3, 3') tout comme l'arbre de papillon (4) et/ou l'axe de clapet (18) grâce à des coulisseaux correspondants (21, 22, 24, 25) et des ouvertures sont formées pour leur logement pivotant dans la section de canal (2, 2'), puis dans une deuxième étape d'injection, le papillon (3, 3') et l'arbre de papillon (4) et/ou l'axe de clapet (18) sont fabriqués dans l'outil par injection d'une matière plastique dans ladite cavité et ensuite les coulisseaux (21, 22, 24, 25) sont déplacés dans leur sens de démoulage respectif et l'élément de fermeture (1, 1') est ainsi démoulé, **caractérisé en ce qu'**après le moulage par injection de la section de canal (2, 2'), celle-ci est retirée du moule à injection de l'outil et insérée dans un autre moule et la deuxième étape d'injection se déroule alors dans celui-ci pour la fabrication du papillon (3, 3') et de l'arbre de papillon (4) et/ou de l'axe de clapet (18).

7. Procédé selon la revendication 6, **caractérisé en ce qu'**après le moulage par injection de la section de canal (2'), des paliers (20) sont insérés dans des ouvertures (19) de la section de canal (2, 2').

8. Procédé selon la revendication 7, **caractérisé en ce qu'**avant le moulage par injection de la section de canal (2') des paliers (20) sont insérés dans l'outil.
